# EUROPÄISCHE PATENTSCHRIFT

(11) **EP 1 655 169 B1**
(45) Veröffentlichungstag und Bekanntmachung des Hinweises auf die Patenterteilung: **19.03.2008**
(21) Anmeldenummer: 05022331.2
(22) Anmeldetag: 13.10.2005
(51) Int. Cl.: B60N 2/46, B60N 3/10

(54) **Mittelarmlehne**
Middle armrest
Accoudoir central

(30) Priorität: 03.11.2004 DE 202004016914 U
(43) Veröffentlichungstag der Anmeldung: 10.05.2006
(73) Patentinhaber: Schenk Plastic Solutions GmbH, 73734 Esslingen-Berkheim (DE)
(72) Erfinder: Rützler, Matthias, 71570 Oppenweiler (DE); Löffler, Jürgen, Dipl.-Ing., 75223 Niefern-Öschelbronn (DE)
(74) Vertreter: Köchling, Conrad-Joachim

(56) Entgegenhaltungen:
- US-A- 5 131 716

## Beschreibung

Die Erfindung betrifft eine Mittelarmlehne als Bestandteil der hinteren Sitzlehne eines Kraftfahrzeuges, wobei die Mittelarmlehne aus einem formstabilen Innenteil besteht, das an gestellfesten Teilen aus einer Nichtgebrauchslage, in der die Rückseite der Mittelarmlehne eine Ergänzung der Sitzlehne bildet, in eine Gebrauchslage, in der die Vorderseite eine Armstützfläche bildet, schwenkbar gehalten ist, wobei mindestens die Vorderseite und die Rückseite gepolstert und gegebenenfalls mit Bezugsmaterial bezogen ist, wobei ferner in die Mittelarmlehne ein Trinkgefäßhalter integriert ist, der bei in Gebrauchslage befindlicher Mittelarmlehne aus seiner Nichtgebrauchsposition in eine Gebrauchsposition und zurück in die Nichtgebrauchsposition verlagerbar ist, wobei die Mittelarmlehne aus einem die Rückseite und Seitenflächen bildenden ersten Teil und einem die Vorderseite bildenden zweiten Teil besteht, dass das zweite Teil am rückwärtigen Endbereich des ersten Teils schwenkbeweglich angelenkt ist, so dass es aus einer Schließlage, in der es ein Deckelteil für das erste Teil bildet, in eine Öffnungslage, in der der Hohlraum des ersten Teils zugänglich ist, verschwenkbar ist, und dass am vorderen freien Ende des ersten Teils der Trinkgefäßhalter um eine parallel zur Schwenkachse des zweiten Teils gerichtete Schwenkachse um etwa 180 schwenkbar gehalten ist, so dass der Trinkgefäßhalter aus einer Ruhelage, in der er in die Höhlung des ersten Teils eingeschwenkt ist, in eine Gebrauchslage verschwenkbar ist, in der er aus der Höhlung herausgeschwenkt und vor dem freien Ende der Mittelarmlehne positioniert ist, wobei sowohl in der Ruhelage als auch in der Gebrauchslage das zweite Teil in die Schließlage verstellbar ist.

Im Stand der Technik ist es bekannt, in eine solche Mittelarmlehne einen Trinkgefäßhalter zu integrieren. Dazu ist es bisher üblich, an der Stirnseite der Mittelarmlehne eine Öffnung vorzusehen, in die ein schubladenartiger Einsatz eingefügt ist, der den Trinkgefäßhalter bildet oder aufnimmt. Eine solche Anordnung ist insofern nachteilig, als dieser Einsatz eine größere Länge haben muss, als der eigentlichen Funktionslänge des Trinkgefäßhalters entspricht, weil bei herausgezogenem Trinkgefäßhalter die Schublade noch in ausreichendem Maße, beispielsweise zu einem Drittel ihrer ausgezogenen Länge, innerhalb der Ausnehmung der Mittelarmlehne verbleiben muss, um eine ausreichende Stabilität und Halterung sicherzustellen.

Es ist auch denkbar, am vorderen Ende der Mittelarmlehne einen Trinkgefäßhalter vorzusehen, der durch ein deckelartiges Klappteil der Mittelarmlehne abgedeckt ist. Sofern in diesem Falle der Trinkgefäßhalter benutzt werden soll, muss das Klappteil aufgeklappt werden, wodurch sich die nutzbare Stützlänge der Mittelarmlehne verringert, was zu Komfortnachteilen führt. Des Weiteren ist es bei den bisherigen Ausbildungen notwendig, die Funktionsbaugruppe in Längsrichtung der Armlehne relativ tief in die Mittelarmlehne eintauchen zu lassen, was wiederum dazu führt, dass große Teile der Mittelarmlehne nicht durch einen weichen Schaumkörper oder dergleichen nachgiebig gestaltet werden können, sondern der harte Kern der Mittelarmlehne, der das entsprechende Funktionsteil aufnimmt, verhindert die entsprechend weiche und nachgiebige Ausbildung, was sowohl aus Komfortgründen, als auch für den Crashfall wegen bestehender Verletzungsgefahr unerwünscht ist.

Eine Mittelarmlehne ähnlicher Art ist beispielsweise aus der US 5131716 bekannt.

Ausgehend von diesem Stand der Technik liegt der Erfindung die Aufgabe zugrunde, eine Mittelarmlehne gattungsgemäßer Art zu schaffen, bei der auch bei in Funktionslage befindlichem Trinkgefäßhalter eine volle Nutzung der gesamten Armlehne als Stützfläche ermöglicht ist und bei der eine weitgehend nachgiebige Polsterung des Körpers der Mittelarmlehne ermöglicht ist.

Zur Lösung dieser Aufgabe schlägt die Erfindung vor, der vordere Endbereich des ersten Teils ein kastenförmiges formstabiles, flaches Innenteil aufweist, in welches der Trinkgefäßhalter einschwenkbar oder eingeschwenkt angeordnet ist, und der restliche Bereich des ersten Teils nach Art eines formstabilen Rahmens ausgebildet ist, in den elastisches oder weiches Polstermaterial eingebracht ist oder in den das Polstermaterial der Rückseite der Mittelarmlehne verdrängbar ist.

Gemäß dieser Ausbildung ist es möglich, bei in Öffnungslage verschwenkten zweiten Teil einen Trinkgefäßhalter aus der Ruhelage um 180 ° in eine Gebrauchslage vor der Stirnseite der Mittelarmlehne zu verschwenken. Anschließend kann das zweite Teil wieder in die Ursprungslage zurückgeführt werden, so dass die gesamte Länge der Mittelarmlehne als Stützfläche nutzbar ist. Durch die Ausbildung des Trinkgefäßhalters als Schwenkelement, ist der benötigte Einbauraum innerhalb des ersten Teils der Armlehne relativ gering zu bemessen, so dass im restlichen Bereich der Mittelarmlehne eine weiche Polsterung durch Schaumkörper oder dergleichen möglich ist, ohne dass dies durch großformatige formstabile Funktionsbaugruppen behindert wäre. Zudem ist eine solche Ausbildung äußerst einfach zu betätigen und sehr funktionell gestaltet.

Eine bevorzugte Weiterbildung wird darin gesehen, dass der Trinkgefäßhalter aus einem Bodenteil besteht, welches am vorderen Ende des ersten Teils angelenkt ist, sowie aus einem brillenähnlichen Stützteil, welches bei in Gebrauchslage befindlichem Trinkgefäßhalter von dem Bodenteil weg gerichtet verlagert ist und Stützflächen für den Mantel eingestellter Getränkebehälter bildet, und in eine dem Bodenteil angenäherte oder am Bodenteil anliegende Ruhelage verstellbar ist, in der der Trinkgefäßhalter in die Ruhelage schwenkbar ist.

Durch diese Ausbildung ist es möglich, einerseits den Trinkgefäßhalter in der Ruhelage auf ein sehr geringes Volumen zusammenzulegen, während in der Gebrauchslage das Verstellen des brillenähnlichen Stützteiles zum Bodenteil ermöglicht ist, so dass eine große Einstelltiefe von Getränkebehältern realisierbar ist, beispielsweise eine Einstellhöhe von 50 bis 60 mm. Das Bodenteil bildet dabei die Stützfläche für den Boden des entsprechenden in das Stützteil eingestellte Gefäß, während das brillenähnliche Stützteil mit Armen oder dergleichen das entsprechende Trinkgefäß am Umfang zumindestens teilweise abstützt.

Des Weiteren ist vorgesehen, dass das Bodenteil des Trinkgefäßhalters einen manuell betätigbaren Riegel aufweist, der bei in Ruhelage eingeschwenktem Trinkgefäßhalter in eine Riegelfalle des ersten Teils, insbesondere des kastenförmigen Innenteils, eingreift.

Dabei ist vorgesehen, dass die Handhabe des Riegels bei in Ruhelage befindlichem Trinkgefäßhalter von der Oberseite her, insbesondere von der Rückseite des Bodenteils, zugänglich ist.

Sofern der Trinkgefäßhalter in die Ruhelage eingeschwenkt ist, fällt der Riegel in die Riegelfalle ein. Sofern der Benutzer den Trinkgefäßhalter benutzen will, kann er den von der Rückseite des Bodenteils her zugänglichen Riegel über die Handhabe betätigen und lösen, so dass der Trinkgefäßhalter in die Gebrauchsposition aufgeschwenkt werden kann.

Um eine weitgehend komfortable Benutzung zu ermöglichen, ist zudem vorgesehen, dass der Trinkgefäßhalter mit einer Öffnerfeder gekoppelt ist, die sich an gestellfesten Bestandteilen abstützt, so dass der Trinkgefäßhalter durch die Öffnerfeder aus der Ruhelage in die Gebrauchslage verschwenkt und gegen die Kraft der Öffnerfeder zurück in die Ruhelage verstellbar ist.

Durch diese Ausbildung wird erreicht, dass der Trinkgefäßhalter, insbesondere nach dem Lösen des Riegelverschlusses selbstständig in die Gebrauchslage aufschwenkt. Das Zurückschwenken in die Ruhelage erfolgt manuell unter zunehmender Vorspannung der Öffnerfeder. Die Ruhelage ist dann wiederum vorzugsweise durch den Riegelverschluss gesichert.

Um auch ein selbständiges Ausschwenken des Stützteiles aus der Ruhelage in die Gebrauchslage zu erreichen, ist vorgesehen, dass das Stützteil am Bodenteil über Stellhebel angelenkt ist, die insbesondere unter der Kraft einer Feder das Stützteil während des oder nach dem Verschwenken des Trinkgefäßhalters in die Gebrauchslage in die vom Bodenteil beabstandete Gebrauchslage verstellen, wobei das Stützteil durch die Schließ-Schwenkbewegung des Trinkgefäßhalters zwangsweise in die Ruhelage zurück verstellbar ist, insbesondere unter Vorspannung der Feder.

Vorzugsweise ist die Ausbildung so vorgenommen, dass das Stützteil beim Verschwenken des Trinkgefäßhalters aus der Gebrauchslage in die Ruhelage an Führungskonturen oder Führungsflächen der umgebenden Teile herangeführt wird, so dass das Stützteil selbständig in die Ruhelage zurückgestellt wird, wenn der Trinkgefäßhalter in die Ruhelage eingeschwenkt wird.

Um den Betätigungskomfort noch zu verbessern, ist vorgesehen, dass am kastenförmigen, formstabilen Innenteil eine Linearführung für einen Stellhebel vorgesehen ist, der an einer Lagerlasche des Bodenteils angelenkt ist, wobei die Anlenkstelle als gebogener Schlitz analog der Bewegung des Bodenteils geformt ist, wobei ferner das in der Linearführung geführte Hebelende mit einer Bremseinrichtung, insbesondere Viskosebremse gekoppelt ist, die an einer Kontur der Linearführung abrollt.

Hierbei wird eine zusätzliche Führung und Stützung des Trinkgefäßhalters erreicht, wobei zudem das Ausschwenken des Trinkgefäßhalters aus der Ruhelage in die Gebrauchslage zwar federunterstützt erfolgt, diese Bewegung aber abgebremst wird, so dass eine angenehme Betätigung erreicht ist.

Ein Ausführungsbeispiel der Erfindung ist in der Zeichnung dargestellt und im Folgenden näher beschrieben. Es zeigt:
- Figur 1: eine erfindungsgemäße Mittelarmlehne mit in Gebrauchslage befindlichem Trinkgefäßhalter;
- Figur 2: desgleichen im Längsschnitt gesehen;
- Figur 3: eine Einzelheit in der Ansicht gemäß Figur 1 gesehen;
- Figur 4: die Einzelheit bei in Ruhelage befindlichem Trinkgefäßhalter im Schnitt gesehen.

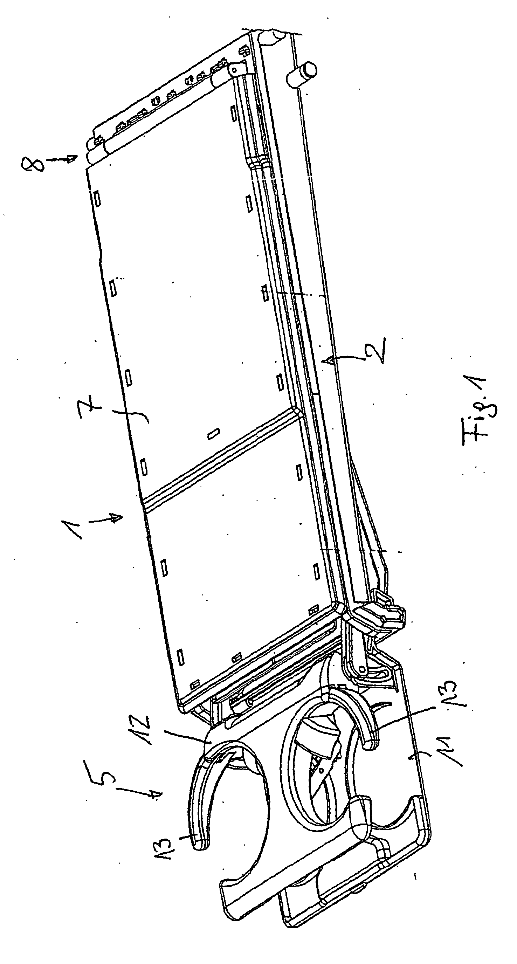

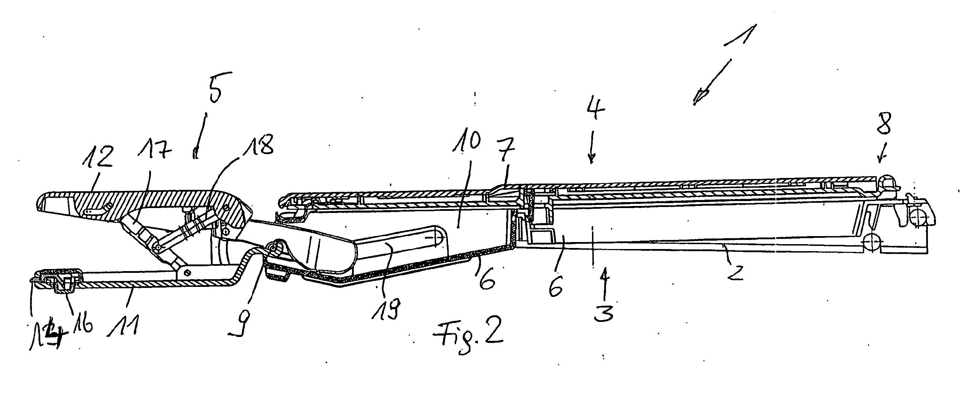

In Figur 1 und Figur 2 ist eine Mittelarmlehne 1 als Bestandteil der hinteren Sitzlehne eines Kraftfahrzeuges gezeigt. Die Mittelarmlehne 1 besteht aus einem formstabilen Innenteil 2, dass an gestellfesten Teilen schwenkbar gehalten ist. Dazu ist am hinteren Ende der Mittelarmlehne, also in der Zeichnungsfigur 1 rechts, eine entsprechende Gelenkausbildung vorgesehen. Die Mittelarmlehne 1 kann damit aus einer Nichtgebrauchslage, in der die Rückseite 3 der Mittelarmlehne eine Ergänzung der Sitzlehne bildet, in eine Gebrauchslage verschwenkt werden, in der die Vorderseite 4 eine Abstützfläche für den Arm eines Benutzers bildet.

In den Zeichnungen ist die Mittelarmlehne 1 nicht mit Polstermaterial gepolstert und auch nicht mit Bezugsmaterial versehen. Solches Polster- und Bezugsmaterial wird aber vor allem oberseitig und unterseitig auf diese Mittelarmlehne aufgebracht.

In die Mittelarmlehne 1 integriert ist ein Trinkgefäßhalter 5.

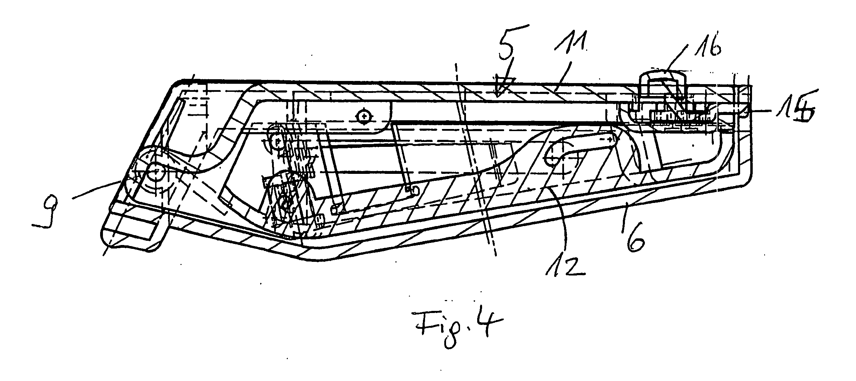

Die Mittelarmlehne 1 besteht aus einem die Rückseite 3 und die Seitenflächen bildenden ersten Teil 6 und einem die Vorderseite 4 bildenden zweiten Teil 7, wobei das zweite Teil 7 am rückwärtigen Endbereich (bei 8) des ersten Teils 6 schwenkbeweglich angelenkt ist, so dass es aus der in der Zeichnung dargestellten Schließlage in der es ein Deckelteil für das erste Teil 6 bildet, in eine Öffnungslage hochgeschwenkt werden kann, in der der Hohlraum des ersten Teiles 6 zugänglich ist. Am vorderen freien Ende des ersten Teils 6 ist der Trinkgefäßhalter 5 um eine parallel zur Schwenkachse des zweiten Teils 7 gerichtete Schwenkachse 9 um etwa 180 ° schwenkbar gehalten. Demzufolge kann der Trinkgefäßhalter 5 aus einer Ruhelage, wie sie in Figur 4 verdeutlicht ist, in der der Trinkgefäßhalter 5 in eine Höhlung 10 des ersten Teils 6 eingeschwenkt ist, in eine Gebrauchslage, die in Figur 1 bis 3 gezeigt ist, aus der Höhlung 10 herausgeschwenkt und vor dem freien Ende der Mittelarmlehne 1 positioniert werden. Sowohl in der Ruhelage gemäß Figur 4 als auch in der Gebrauchslage gemäß Figur 1 bis 3 kann das zweite Teil 7 in die Schließlage verstellt werden, wie in Figur 1 und 2 ersichtlich ist. Die gesamte Mittelarmlehne 1 steht damit als Armauflage zur Verfügung, unabhängig davon, ob der Trinkgefäßhalter 5 ausgeschwenkt oder eingeschwenkt ist.

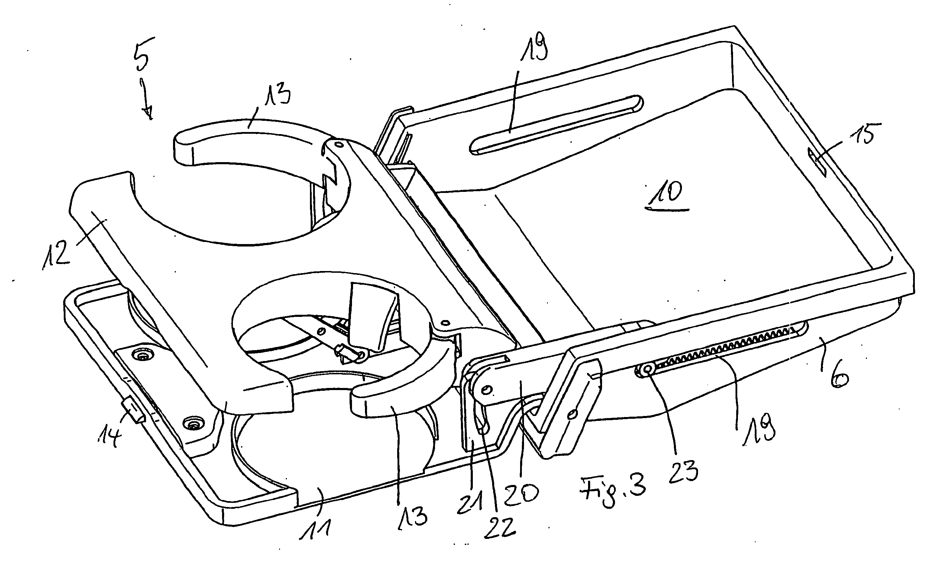

Der vordere Endbereich des ersten Teils 6 bildet ein kastenförmiges, formstabiles, flaches Innenteil, wie insbesondere in Figur 3 ersichtlich ist. In dieses ist der Trinkgefäßhalter 5 in der Nichtgebrauchslage einschwenkbar. Der restliche Teil des ersten Teils 6 ist nach Art eines formstabilen Rahmens ausgebildet, wie insbesondere in Figur 2 rechts ersichtlich, wobei elastisches oder weiches Polstermaterial in diesem Rahmen eingebracht werden kann oder zumindest das Polstermaterial von der Rückseite 3 der Mittelarmlehne her in diesen Hohlraum verdrängbar ist, sei dies durch einen Benutzer oder sei dies im Crashfall durch aufprallende Körperteile oder sonstige Teile.

Der Trinkgefäßhalter 5 besteht aus einem Bodenteil 11, welches am vorderen Ende des ersten Teils 6 angelenkt ist sowie aus einem brillenähnlichen Stützteil 12, welches bei in der Gebrauchslage befindlichem Trinkgefäßhalter 5 von dem Bodenteil 11 weg gerichtet verlagert ist, also in der Zeichnung gemäß Figur 2 nach oben. Dieses Stützteil 12 bildet Stützflächen für den Mantel eingestellter Getränkebehälter. Dabei kann das Stützteil 12 schwenkbewegliche Stützarme 13 aufweisen, in der ausgeschwenkten Lage in eine Gebrauchslage aufschwenken und in der eingeschwenkten Lage des Trinkgefäßhalters 5 durch Gehäusekonturen des Teiles 6 nach innen weggedrängt werden, um ein Einschwenken mit geringem Platzbedarf zu ermöglichen. Am Bodenteil 11 des Trinkgefäßhalters 5 ist ein manuell betätigter Riegel 14 vorgesehen, der bei in Ruhelage eingeschwenktem Trinkgefäßhalter, wie in Figur 4 gezeigt, in eine Riegelfalle 15 des ersten Teils 6, insbesondere des kastenförmigen Innenteils eingreift. Zur Betätigung des Riegels 14 ist eine Handhabe 16 vorgesehen, die in Schließlage von der Oberseite her, also im Prinzip von der Rückseite des Bodenteils 11 zugreiflich ist, die in der Nichtgebrauchslage oberseitig angeordnet ist.

Vorzugsweise ist der Trinkgefäßhalter 5 mit einer Öffnerfeder gekoppelt, die sich an gestellfesten Bestandteilen beispielsweise des Teiles 6 abstützt, so dass der Trinkgefäßhalter 5 durch die Öffnerfeder aus der Ruhelage gemäß Figur 4 in die Gebrauchslage gemäß Figur 1 bis 3 unter Federkraft verschwenkt wird und gegen die Kraft der Öffnerfeder zurück in die Ruhelage gemäß Figur 4 verstellbar ist. Die Ruhelage ist durch den Riegel 14 gesichert.

Das Stützteil 12 ist am Bodenteil 11 über Stellhebel 17,18 angelenkt, die gegebenenfalls unter der Kraft einer Öffnerfeder das Stützteil 12 während oder nach dem Verschwenken des Trinkgefäßhalters 5 in die Gebrauchslage in die vom Bodenteil 11 beabstandete Lage verstellen. Die Ausbildung ist so vorgenommen, dass das Stützteil 12 durch die Schließ-Schwenkbewegung des Trinkgefäßhalters 5 zwangsweise in die Ruhelage zurückverstellt wird, insbesondere unter Spannung der Öffnerfeder, die in der Endlage in Figur 4 veranschaulicht ist. Zusätzlich ist an dem kastenförmigen formstabilen Innenteil 6 eine Linearführung 19 vorgesehen, vorzugsweise an beiden parallelen Schenkeln des Teiles 6, wobei in die Linearführung 19 jeweils das Ende eines Stellhebels 20 eingreift, der andererseits an einer Lagerlasche 21 des Bodenteils 11 angelenkt ist. Diese Anlenkstelle ist als gebogener Schlitz 22 ausgebildet, so dass eine zwängungsfreie Bewegung der Teile zueinander erreicht ist. Zusätzlich ist das in der Linearführung 19 geführte Hebelende mit einer Bremseinrichtung 23, insbesondere einer Viskosebremse gekoppelt, die an einer gezahnten Kontur der Linearführung 19 mit einem Zahnrad abrollt, so dass die Ausschwenkbewegung, die durch die Federkraft verursacht wird, verlangsamt ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Mittelarmlehne (1) als Bestandteil der hinteren Sitzlehne eines Kraftfahrzeuges, wobei die Mittelarmlehne (1) aus einem formstabilen Innenteil (2) besteht, das an gestellfesten Teilen aus einer Nichtgebrauchslage, in der die Rückseite (3) der Mittelarmlehne (1) eine Ergänzung der Sitzlehne bildet, in eine Gebrauchslage, in der die Vorderseite (4) eine Armstützfläche bildet, schwenkbar gehalten ist, wobei mindestens die Vorderseite (4) und die Rückseite (3) gepolstert und gegebenenfalls mit Bezugsmaterial bezogen ist, wobei ferner in die Mittelarmlehne (1) ein Trinkgefäßhalter (5) integriert ist, der bei in Gebrauchslage befindlicher Mittelarmlehne (1) aus seiner Nichtgebrauchsposition in eine Gebrauchsposition und zurück in die Nichtgebrauchsposition verlagerbar ist, wobei die Mittelarmlehne (1) aus einem die Rückseite (3) und Seitenflächen bildenden ersten Teil (6) und einem die Vorderseite (4) bildenden zweiten Teil (7) besteht, dass das zweite Teil (7) am rückwärtigen Endbereich (8) des ersten Teils (6) schwenkbeweglich angelenkt ist, so dass es aus einer Schließlage, in der es ein Deckelteil für das erste Teil (6) bildet, in eine Öffnungslage, in der der Hohlraum des ersten Teils (6) zugänglich ist, verschwenkbar ist, und dass am vorderen freien Ende des ersten Teils (6) der Trinkgefäßhalter (5) um eine parallel zur Schwenkachse des zweiten Teils (7) gerichtete Schwenkachse (9) um etwa 180 ° schwenkbar gehalten ist, so dass der Trinkgefäßhalter (5) aus einer Ruhelage, in der er in die Höhlung des ersten Teils (6) eingeschwenkt ist, in eine Gebrauchslage verschwenkbar ist, in der er aus der Höhlung herausgeschwenkt und vor dem freien Ende der Mittelarmlehne (1) positioniert ist, wobei sowohl in der Ruhelage als auch in der Gebrauchslage das zweite Teil (7) in die Schließlage verstellbar ist, **dadurch gekennzeichnet, dass** der vordere Endbereich des ersten Teils (6) ein kastenförmiges formstabiles, flaches Innenteil aufweist, in welches der Trinkgefäßhalter (5) einschwenkbar oder eingeschwenkt angeordnet ist, und der restliche Bereich des ersten Teils (6) nach Art eines formstabilen Rahmens ausgebildet ist, in den elastisches oder weiches Polstermaterial eingebracht ist oder in den das Polstermaterial der Rückseite (3) der Mittelarmlehne (1) verdrängbar ist.

2. Mittelarmlehne nach Anspruch 1, **dadurch gekennzeichnet, dass** der Trinkgefäßhalter (5) aus einem Bodenteil (11) besteht, welches am vorderen Ende des ersten Teils (6) angelenkt ist, sowie aus einem brillenähnlichen Stützteil (12), welches bei in Gebrauchslage befindlichem Trinkgefäßhalter (5) von dem Bodenteil (11) weg gerichtet verlagert ist und Stützflächen für den Mantel eingestellter Getränkebehälter bildet, und in eine dem Bodenteil (11) angenäherte oder am Bodenteil (11) anliegende Ruhelage verstellbar ist, in der der Trinkgefäßhalter (5) in die Ruhelage schwenkbar ist.

3. Mittelarmlehne nach einem der Ansprüche 1 oder 2, **dadurch gekennzeichnet, dass** das Bodenteil (11) des Trinkgefäßhalters (5) einen manuell betätigbaren Riegel (14) aufweist, der bei in Ruhelage eingeschwenktem Trinkgefäßhalter (5) in eine Riegelfalle (15) des ersten Teils (6), insbesondere des kastenförmigen Innenteils, eingreift.

4. Mittelarmlehne nach Anspruch 3, **dadurch gekennzeichnet, dass** die Handhabe (16) des Riegels (14) bei in Ruhelage befindlichem Trinkgefäßhalter (5) von der Oberseite her, insbesondere von der Rückseite des Bodenteils (11), zugänglich ist.

5. Mittelarmlehne nach einem der Ansprüche 1 bis 4, **dadurch gekennzeichnet, dass** der Trinkgefäßhalter (5) mit einer Öffnerfeder gekoppelt ist, die sich an gestellfesten Bestandteilen abstützt, so dass der Trinkgefäßhalter (5) durch die Öffnerfeder aus der Ruhelage in die Gebrauchslage verschwenkt und gegen die Kraft der Öffnerfeder zurück in die Ruhelage verstellbar ist.

6. Mittelarmlehne nach einem der Ansprüche 1 bis 5, **dadurch gekennzeichnet, dass** das Stützteil (12) am Bodenteil (11) über Stellhebel (17,18) angelenkt ist, die insbesondere unter der Kraft einer Feder das Stützteil (12) während des oder nach dem Verschwenken des Trinkgefäßhalters (5) in die Gebrauchslage in die vom Bodenteil (11) beabstandete Gebrauchslage verstellen, wobei das Stützteil (12) durch die Schließ-Schwenkbewegung des Trinkgefäßhalters (5) zwangsweise in die Ruhelage zurück verstellbar ist, insbesondere unter Vorspannung der Feder.

7. Mittelarmlehne nach einem der Ansprüche 1 bis 6, **dadurch gekennzeichnet, dass** am kastenförmigen, formstabilen Innenteil eine Linearführung (19) für einen Stellhebel (20) vorgesehen ist, der an einer Lagerlasche (21) des Bodenteils (11) angelenkt ist, wobei die Anlenkstelle als gebogener Schlitz (22) analog der Bewegung des Bodenteils (11) geformt ist, wobei ferner das in der Linearführung (19) geführte Hebelende mit einer Bremseinrichtung (23), insbesondere Viskosebremse gekoppelt ist, die an einer Kontur oder Linearführung (19) abrollt.

## Claims

1. A central armrest (1) as a component of the seat back of a motor vehicle, where the central armrest (1) consists of an inherently stable inner component (2) that is mounted on components fixed to the mount to pivot from a position of non-use, in which the rear side (3) of the central armrest (1) forms an extension to the seat back, into a position of use, in which the front side (4) forms an arm support surface, where at least the front side (4) and the rear side (3) are padded and possibly covered with upholstery material, where in addition a beverage container holder (5) is integrated into the central arm rest (12), and, when the central armrest (1) is in the position of use, said beverage container holder (5) can be moved out of its position of non-use into a position of use and back into the position of non-use, where the central armrest (1) consists of a first component (6) forming the rear side (3) and side faces and a second component (7) forming the front side (4), the second component (7) is hinged to the rear end region (8) of the first component (6) so that it can be pivoted out of a closed position in which it forms a cover part for the first component (6) into an open position in which the cavity of the first component (6) is accessible, and at the front free end of the first component (6) the beverage container holder (5) is mounted to pivot around a pivot axis (9) directed parallel to the pivot axis of the second component (7) by roughly 180°, so that the beverage container holder (5) can be swivelled out of a position of rest, in which it is pivoted into the cavity of the first component (6), into a position of use, in which it is swivelled out of the cavity and is positioned in front of the free end of the central armrest (1), where in the position of rest and in the position of use the second component (7) can be moved into the closed position,
**characterised in that** the front end region of the first component (1) comprises a box-shaped, inherently stable, flat inner component into which the beverage container holder (5) can be swivelled or has been swivelled, and the remaining area of the first component (6) is designed in the manner of an inherently stable frame into which elastic or soft upholstery material is inserted or into which the upholstery material of the rear side (3) of the central armrest (1) can be squeezed.

2. A central armrest according to Claim 1,
**characterised in that** the beverage container holder (5) consists of a base component (11), which is hinged to the front end of the first component (6), and a support component (12) similar to spectacles, which, when the beverage container holder (5) is in the position of use, is displaced away from the base component (11) and forms support surfaces for the surface of inserted beverage containers, and can be moved into a position of rest close to the base component (11) or adjacent to the base component (11), in which the beverage container holder (5) can be swivelled into the position of rest.

3. A central armrest according to one of Claims 1 or 2,
**characterised in that** the base component (11) of the beverage container holder (5) comprises a manually operable latch (14) that engages into a latch catch (15) of the first component (6), in particular the box-shaped inner component, when the beverage container holder (5) is swivelled into the position of rest.

4. A central armrest according to Claim 3,
**characterised in that** the handle (16) of the latch (14) is accessible from the top side, in particular from the rear of the base component (11), when the beverage holder (5) is in the position of rest.

5. A central armrest according to one of Claims 1 to 4,
**characterised in that** the beverage container holder (5) is coupled to an opener spring supported on components fixed to the mount so that the beverage container holder (5) is pivoted by the opener spring from the position of rest into the position of use and can be moved against the force of the opener spring back into the position of rest.

6. A central armrest according to one of Claims 1 to 5,
**characterised in that** the support component (12) is hinged to the base component (11) by means of adjusting levers (17, 18), which move the support component (12) in particular under the force of a spring during or after the pivoting of the beverage container holder (5) into the position of use into the position of use spaced from the base component (11), it being possible to move the support component (12) by the closing pivot movement of the beverage container holder (5) compulsorily back into the position of rest, in particular under the bias of the spring.

7. A central armrest according to one of Claims 1 to 6,
**characterised in that** a linear guide (19) for an adjusting lever (20) that is hinged to a link plate (21) of the base component (11) is provided on the box-shaped, inherently stable inner component, the link point being formed as a curved slot (22) modelled on the movement of the base component (11), the lever end guided in the linear guide (19) also being coupled with a braking mechanism (23), in particular a viscous brake, that rolls on a contour or linear guide (19).

## Revendications

1. Accoudoir central (1) comme élément du dossier du siège arrière d'un véhicule automobile, l'accoudoir central (1) comprenant un élément intérieur indéformable (2) qui est maintenu sur des éléments solidaires du bâti à pivotement d'une position de non-utilisation, dans laquelle le côté arrière (3) de l'accoudoir central (1) forme un complément du dossier, dans une position d'utilisation dans laquelle le côté avant (4) forme une surface d'appui pour le bras, au moins le côté avant (4) et le côté arrière (3) étant rembourrés et éventuellement revêtus d'un matériau de revêtement, un support (5) de récipient à boissons étant intégré en outre dans l'accoudoir central (1), support qui, lors l'accoudoir central (1) se trouve en position d'utilisation, peut être déplacé de sa position de non-utilisation dans une position d'utilisation et en retour dans la position de non-utilisation, l'accoudoir central (1) comprenant un premier élément (6) formant le côté arrière (3) et les faces latérales et un deuxième élément (7) formant le côté avant (4), le deuxième élément (7) étant articulé à pivotement sur la région terminale arrière (8) du premier élément (6), de sorte qu'il peut être pivoté d'une position fermée ou de fermeture, dans laquelle il constitue un élément de recouvrement pour le premier élément (6), dans une position ouverte dans laquelle la cavité du premier élément (6) est accessible, et le support (5) de récipient à boissons étant maintenu à l'extrémité avant libre du premier élément (6) à pivotement d'environ 180° autour d'un axe de pivotement (9) orienté parallèlement à l'axe de pivotement du deuxième élément (7), de sorte que le support (5) de récipient à boissons peut être pivoté d'une position de repos, dans laquelle il est rentré par pivotement dans la cavité du premier élément (6), dans une position d'utilisation dans laquelle il est pivoté hors de la cavité et positionné devant l'extrémité libre de l'accoudoir central (1), le deuxième élément (7) pouvant être déplacé dans la position fermée ou de fermeture tant dans la position de repos que dans la position d'utilisation, **caractérisé en ce que** la région terminale avant du premier élément (6) présente un élément intérieur plat indéformable en forme de caisson, dans lequel le support (5) de récipient à boissons est disposé en étant ou pouvant être rentré par pivotement, et la région restante du premier élément (6) est réalisée à la manière d'un cadre indéformable dans lequel est introduit un matériau de rembourrage élastique ou mou ou dans lequel peut être refoulé le matériau de rembourrage du côté arrière (3) de l'accoudoir central (1).

2. Accoudoir central selon la revendication 1, **caractérisé en ce que** le support (5) de récipient à boissons est constitué d'un élément de fond (11) qui est articulé sur l'extrémité avant du premier élément (6) ainsi que d'un élément de soutien (12) du genre lunettes qui, lorsque le support (5) de récipient à boissons se trouve en position d'utilisation, est déplacé en éloignement de l'élément de fond (11) et forme des surfaces de soutien pour le pourtour ou l'enveloppe des récipients à boissons mis en place, et qui peut être déplacé dans une position de repos approchée de l'élément de fond (11) ou appliquée contre l'élément de fond (11), dans laquelle le support (5) de récipient à boissons peut être pivoté dans la position de repos.

3. Accoudoir central selon la revendication 1 ou 2, **caractérisé en ce que** l'élément de fond (11) du support (5) de récipient à boissons présente un loquet (14) à actionnement manuel qui, lorsque le support (5) de récipient à boissons est rentré par pivotement en position de repos, s'engage dans un mentonnet (15) du premier élément (6), notamment de l'élément intérieur en forme de caisson.

4. Accoudoir central selon la revendication 3, **caractérisé en ce que** la manette (16) du loquet (14) est, lorsque le support (5) de récipient à boissons se trouve en position de repos, accessible par le dessus, notamment par le côté arrière de l'élément de fond (11).

5. Accoudoir central selon l'une des revendications 1 à 4, **caractérisé en ce que** le support (5) de récipient à boissons est couplé à un ressort d'ouverture qui s'appuie contre des éléments solidaires du bâti, de sorte que le support (5) de récipient à boissons est pivoté par le ressort d'ouverture de la position de repos dans la position d'utilisation et peut être ramené dans la position de repos à l'encontre de la force du ressort d'ouverture.

6. Accoudoir central selon l'une des revendications 1 à 5, **caractérisé en ce que** l'élément de soutien (12) est articulé sur l'élément de fond (11) par l'intermédiaire de leviers d'actionnement (17, 18) qui, en particulier sous la force d'un ressort, pendant ou après le pivotement du support (5) de récipient à boissons dans la position d'utilisation, déplacent l'élément de soutien (12) dans la position d'utilisation distante de l'élément de fond (11), l'élément de soutien (12) étant, par le mouvement de pivotement de fermeture du support (5) de récipient à boissons, ramené de manière forcée dans la position de repos, notamment sous la précontrainte du ressort.

7. Accoudoir central selon l'une des revendications 1 à 6, **caractérisé en ce qu'**un guide linéaire (19) est prévu sur l'élément intérieur indéformable en forme de caisson pour un levier d'actionnement (20) qui est articulé sur une patte formant palier (21) de l'élément de fond (11), le point d'articulation étant réalisé sous la forme d'une fente arquée (22) en analogie au mouvement de l'élément de fond (11), l'extrémité du levier qui est guidée dans le guide linéaire (7) étant en outre couplée à un dispositif de freinage (23), notamment un frein à fluide visqueux, qui roule sur un contour du guide linéaire (19).
